(19) Europäisches Patentamt European Patent Office Office européen des brevets

(11) **EP 3 876 418 B1**

(12) **EUROPEAN PATENT SPECIFICATION**

(45) Date of publication and mention
of the grant of the patent:
**13.12.2023 Bulletin 2023/50**

(21) Application number: **20161514.3**

(22) Date of filing: **06.03.2020**

(51) International Patent Classification (IPC):
***H02P 6/185*** *(2016.01)*

(52) Cooperative Patent Classification (CPC):
**H02P 6/185;** H02P 2207/05

(54) **METHOD FOR DETECTING THE ORIENTATION OF THE ROTOR POLARITY OF A BLDC MOTOR**

VERFAHREN ZUR ERKENNUNG DER AUSRICHTUNG DER ROTORPOLARITÄT EINES BLDC-MOTORS

PROCÉDÉ DE DÉTECTION DE L'ORIENTATION DE LA POLARITÉ DE ROTOR D'UN MOTEUR BLDC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.09.2021 Bulletin 2021/36**

(73) Proprietor: **maxon international ag**
**6072 Sachseln (CH)**

(72) Inventors:
• **Mariéthoz, Sébastien**
  **2562 Port (CH)**
• **Nicollerat, Marc**
  **1920 Martigny (CH)**

(74) Representative: **Grünecker Patent- und Rechtsanwälte**
**PartG mbB**
**Leopoldstraße 4**
**80802 München (DE)**

(56) References cited:
EP-A1- 3 226 403          DE-A1-102009 029 896
JP-A- 2013 172 634        US-A1- 2010 060 210
US-A1- 2018 167 010

• **TANASKOVIC MARKO ET AL: "Rotor Polarity Detection and Tracking for Slotless Permanent Magnet Synchronous Motors", 2018 IEEE 9TH INTERNATIONAL SYMPOSIUM ON SENSORLESS CONTROL FOR ELECTRICAL DRIVES (SLED), IEEE, 13 September 2018 (2018-09-13), pages 102-107, XP033417503, DOI: 10.1109/SLED.2018.8486065 [retrieved on 2018-10-08]**

**Description**

The invention refers to a method for detecting the orientation of the rotor polarity of a BLDC motor, i.e. eliminating a 180° ambiguity, comprising the steps of the preamble of claim 1.

Such a method is known from US 2018/167010 A1.

The usual method to detect the polarity of the rotor in sensorless applications is based on the saturation effects (see e.g. [2]). Such methods are fully based on electrical characteristics of the motor and do not require any movement of the motor. However, in their current form, the state of the art methods do not work for BLDC motors with either ironless or slotless windings. The main reason for this is that the saturation effects for such motors are so weak, that it is practically impossible to distinguish these effects because of inverter distortion and measurement noise. An alternative approach is the detection of the position based on rotor oscillations (see e.g. [4], [5], [6]). In these techniques, the initial rotor position is identified based on the back EMF estimation after causing the rotor to oscillate. The idea is to cause oscillatory movement of the rotor that creates enough back EMF and then to use standard techniques based on back EMF estimation in order to detect the rotor position. Yet another alternative is to cause minor and controlled motion of the rotor that induces back EMF but causes only temporary and small displacement of the rotor from its initial position (see e.g. [7] and [8]). However, all these methods rely on motion of the rotor, which is not acceptable in many practical applications. The only way to determine rotor polarity without moving the rotor is to use saturation effects as in [2].

Further prior art documents to be cited are EP 3 226 403 A1, DE 10 2009 029896 A1, US 2010/060210 A1 and JP 2013 172634 A.

The object of the present invention is to present a method for detecting with sufficient precision the orientation of the rotor polarity of a BLDC motor, especially with an ironless or slotless winding.

The object is solved by the features of independent claim 1. According to the invention, the method for detecting the orientation of the rotor polarity of a BLDC motor, i.e. eliminating a 180° ambiguity, comprises the following steps:

determining the position of a rotor, i.e. the rotor angle, with a 180° ambiguity,

injecting at least one voltage pulse with an orientation in the α-β plane that matches the orientation of the rotor determined in the previous step,

taking current samples with especially high frequency resulting from the at least one voltage pulse during a period where zero voltage is applied in order to gain a representation of the resulting current waveform, and

processing the current samples to determine small variations in the current waveform indicative for the orientation of the rotor polarity.

The processing of the current samples is substantially based on mathematical methods, which involve the dynamic evolution of the current samples projected onto the injected voltage vector or the measured current vector. Preferably, a resulting excitation angle of a positive voltage pulse is identical to a resulting excitation angle of a negative voltage pulse and all voltage pulses have the same value.

The following model of evolution is used in the processing step:

$$i_{k+1} = i_k + a_1 \cdot i_k + a_2 \cdot f(i_k) + b,$$

wherein

$i_k$ is an amount of the current vector,

$f(i_k)$ is an even function of $i_k$,

$i_{k+1}$ is an amount of a subsequent current vector and

$a_1$, $a_2$ and b are parameters

and wherein the parameters $a_1$, $a_2$ and $b$ are determined by use of a least squares algorithm or a method for identifying unknown parameters or a method for solving systems for respective equations.

In an preferred embodiment, the following model of evolution is used in the processing step:

$$i_{k+1} = i_k + a_1 \cdot i_k + a_2 \cdot i_k^2 + b,$$

wherein

$i_k$ is an amount of the current vector,

$i_{k+1}$ is an amount of a subsequent current vector and
$a_1$, $a_2$ and b are parameters

and wherein the parameters $a_1$, $a_2$ and $b$ are determined by use of a least squares algorithm or a method for identifying unknown parameters or a method for solving systems for respective equations.

The parameters $a_1$, $a_2$ and $b$ are considered to be unknown. In particular, treating the parameters $a_1$ and $a_2$ as the parameters that are the same for all of the excitation pulses and $b$ as a parameter, which may have different values for each excitation pulse, for example least squares algorithm is used in order to identify all of these parameters. Alternative online and offline methods for identifying unknown parameters may be used, preferably for models that are linear in the unknown parameters.

The invention has the advantage that the mathematical model of the motor is simplified because the term comprising the stator voltage can be neglected. Furthermore, the invention also allows the detection of the orientation of the rotor polarity even though the saturation effects of such a motor are rather small.

The method is thus suitable for ironless BLDC motors with an ironless or slotless winding or in general for all motors with very small anisotropies. The invention presents a solution to almost totally eliminate the impact of the inverter distortion and thus to obtain very accurate estimate of the orientation of the rotor polarity.

Within the meaning of the present invention, the term "injecting at least one voltage pulse" also applies if not only applied to one phase but also to two or three phases. Depending on the excitation angle, the voltage vector applied to the phases is composed of the voltage as applied to each single phase, as some components may also be zero. In practice it is very rare hat the voltage pulse needs to be injected only in one phase. The same applies for the "taking of the current samples", which can be carried out for only one or two or three phases.

The $\alpha$-$\beta$ plane shall match the d-q plane of the rotor, i.e. injecting at least one voltage pulse along the direction of the rotor magnet (along the pole axis).

Preferably, the step of injecting at least one voltage pulse is carried out without causing any motion of the rotor. Either the voltage pulse(s) is/are so short that inertia of the rotor prevents movement at all or as in a preferred embodiment, the step of injecting at least one voltage pulse involves excitation of positive and negative voltage pulses in the $\alpha$-$\beta$ plane. In the latter embodiment, a vector voltage pulse pattern is preferably followed by its opposite vector voltage pulse pattern (in the $\alpha$-$\beta$ plane) such that no rotation of the rotor is incurred.

The method requires the position of the rotor to already be known precisely (with a possible error of 180°, i.e. unknown orientation of the polarity). If the position of the rotor is not determined accurately and the voltage pulses do not match the orientation of the rotor accurately, high voltage pulses may cause a non-negligible moment on the rotor. The rotor position (with a possible error of 180°) can be estimated without using the position sensors by using some of the existing methods for sensorless rotor position detection (see e.g. EP 2924870 A1 [1], [2] or [3] and the references there).

In the method first the magnet position (rotor position) is precisely determined. From its angle a vector in the $\alpha$-$\beta$ frame is constructed. This vector is transformed into 3 phase voltages that should be applied to the phases by using the inverse Clarke or Concordia transformation.

Advantageously, as many current samples as possible in the period where zero voltage is applied are taken. Therefore, in the step of taking the current samples, the acqusition starts substantially immediately after the start of the period where zero voltage is applied until the current, which exponentially decays toward zero, reaches zero or nearly zero. This is done to substantially gain information on the whole current waveform in this time period. The acquisition of samples in high frequency means that a sampling rate of preferably at least 100 kHz is applied.

Preferably, in the processing step only parameter $a_2$ is used for determining the orientation of the rotor polarity. Namely, if the parameter $a_2$ is positive, the rotor angle is in the range 180° - 360° and when it is negative the rotor angle is in the range 0° - 180° and thus eliminating the 180° ambiguity. This special modulation and sampling scheme helps to identify the specific parameter that encodes information on the rotor orientation. This methodology especially makes it possible to detect saturation effects even with BLDC motors with ironless or slotless winding and to therefore detect rotor polarity preferably without any motion of the rotor, which was not possible with any of the existing methods.

An important aspect of the inventive method is the injection of the at least one voltage pulse. The differences in the current waveforms for different rotor orientations are very small for the ironless BLDC motors and therefore, the amplitude of the current pulse that results from the voltage excitation has to be relatively high. On the other hand, too high amplitude current pulses may damage the control electronics or even the motor. Therefore, in order to have a sufficient amplitude of the current pulses that still allows for the rotor polarity detection, the corresponding at least one voltage pulse should have specific characteristics. Therefore, it is advantageous that in a processing step before the step of injecting at least one voltage pulse at least the time length of the at least one voltage pulse is determined based on stored and/or identified motor electric parameters. Thus, the time length of the at least one voltage pulse is adapted to the motor electric parameters of the BLDC motor for which the orientation of the rotor polarity has to be detected. This enhances the precision of the detection.

Preferably, the motor electric parameters which will be regarded are the motor resistance ($R$), inductance ($L$) and motor electrical time constant ($\tau$). These are precisely identified for the respective BLDC motor. Any state-of-the-art method for identifying the motor electrical parameters may be used to this end. One possibility is to use a Pseudorandom binary sequence (PRBS) voltage excitation signal and least squares identification, but any other method may also be used. Identified parameters are then used to calculate the optimal length of the at least one voltage pulse. This is rather important because even small deviations within the tolerance of the manufacturing of a certain type of BLDC motor may have an influence on the detection method. It is thus advantageous to have the motor electrical parameters as precise as possible and not only retrieve them from a datasheet of a respective motor type which means the precision is better than the allowed tolerance of the manufacturing process of the BLDC motor.

In a preferred embodiment, the time length of the at least one voltage pulse is determined based on the following equation:

$$T_{Pulse} = -\tau \cdot \ln\left(1 - \frac{I_{Amp} \cdot R}{U_{DC}}\right)$$

wherein

$R$ is the stored or identified motor resistance,
$\tau$ is the stored or identified motor electrical time constant,
$I_{Amp}$ is a predefined optimal current amplitude, and
$U_{DC}$ is the voltage that can be applied to the motor with the given driver supply voltage and an allowed duty cycle.

In this determination, a predefined optimal current amplitude is used. This is selected such that the amplitude is between a minimum threshold in order to allow a precise detection method and an upper threshold which prevents damage of the control electronics or even the motor. Current amplitudes below the lower threshold may increase the error rate of the detection method. At best, the lower threshold has a minimum of at least 75% of the maximum possible amplitude. Preferably, the voltage $U_{DC}$ is the maximal voltage that can be applied to the motor with the given driver supply voltage and the maximal allowed duty cycle. The maximum allowed duty cycle is the maximum duty cycle of the PWM period to be used.

In order to apply the calculated voltage as accurately as possible, which is necessary for BLDC motors with an ironless or slotless winding that feature very little anisotropy, voltage pulse patterns that are as little distorted as possible are generated. In order to implement such pattern on standard microcontroller PWM modulators, it is preferred to apply patterns with as little switching as possible. It is therefore preferred to saturate the duty cycles of the phases such that consecutive voltage pulses are applied by keeping the voltage of one phase at maximum, the voltage of another phase at zero and adapting the voltage of the third phase such that the desired resulting voltage vector is achieved. This is done for all the voltage pulses except the first voltage pulse, which is adjusted to achieve exactly the targeted voltage pulse length. It is preferred that the actual value of time length of the first voltage pulse is determined by rounding the value determined on the basis of the mentioned equation to a higher value of time length equal to an integer multiple of the PWM period and the required value of the duty cycle is scaled accordingly to gain a close match to the predefined optimal current amplitude. As a result, the actual value of the time length of the at least one voltage pulse is adapted to the predefined optimal current amplitude which is preferably needed in the detection method. With rounded up voltage pulse duration (see example below), the duty cycle is shortened accordingly to meet the predetermined optimum current value again. Example: At a PWM frequency of 50 kHz, the duration of the PWM period is 20 microseconds. It has now a calculated pulse width for the voltage pulse $T_{Pulse}$ of 90 microseconds, so it is rounded up to a multiple of the PWM period. In this case 100 microseconds. To compensate for this prolongation of the voltage pulse, the duty cycle of the PWM period is now multiplied by 0.9 and thus shortened to compensate for the extension of the total pulse duration. The maximum allowed duty cycle is in this case, with an extended pulse, 0.9 times the originally intended duty cycle.

Preferably, the predefined optimal current amplitude is determined in an offline experimental procedure and the predefined optimal current amplitude for the respective BLDC is, at least initially, automatically retrieved from a lookup table in order to determine the time length of the at least one voltage pulse. This is done to ascertain that a too high amplitude of the current pulses is avoided and on the other hand to ascertain a minimum possible amplitude of the current pulses that still allows an optimal rotor polarity detection. Preferably, these optimal current amplitudes are determined in an offline experimental procedure for various different motor families. In the online procedure, the optimal current amplitude is determined from the lookup table based on the identified motor electric parameters, namely, motor resistance, motor inductance, motor electrical time constant and motor material parameters (for example the parameters of the magnet material). Based on this pre-defined optimal current amplitude, the time length of the voltage pulse excitation pulse is calculated.

The invention also applies to a motor system for detecting the orientation of the rotor polarity of a BLDC motor, i.e. eliminating 180° ambiguity according to the method of one of claims 1 - 15. The motor system comprises a processing unit for processing current samples to determine small variations in a current waveform indicative for the orientation of the rotor polarity. Preferably the processing unit is a microcontroller, for example an ARM microcontroller, or a digital signal processor (DSP).

Methods for determining the position of the rotor (i.e. the rotor angle with a 180° ambiguity) using existing methods for sensorless rotor position detection are disclosed in EP 2924870 A1 [1] as well as in [2] or [3]. Although in [1], it is mentioned that also the position of the polarity of the rotor is determined, it does not overcome the 180° ambiguity, especially for motors that have very small saturation effects like BLDC motors with an ironless or slotless winding.

In the following, the invention is described with reference to figures, wherein:

Fig. 1 is an illustration of the injection end sampling scheme underlying the present invention, and

Fig. 2 is a diagram of the experimentally determined values for parameter $a_2$ as a function of rotor position.

The preferred embodiment of the inventive method consists substantially of three phases. These are.

1.) Identification of the motor electric parameters.

2.) Calculation of the time length of the voltage excitation pulses.

3.) Excitation execution, sample collection, processing and orientation determination.

### 1.) **Identification of the motor electric parameters**

In this phase, the electric parameters that characterize the motor are identified. These are motor resistance ($R$), inductance ($L$) and motor electrical time constant ($\tau$). A PRBS voltage excitation signal and least squares identification may be used for the identification of the motor electric parameters. The identified parameters are then used to calculate the optimal length of the voltage excitation pulses.

### 2.) **Calculation of the excitation pulse parameters**

The differences in the current waveforms for different rotor orientations are very small for the ironless BLDC motors and therefore, the amplitude of the current pulse that results from the voltage excitation has to be relatively high. On the one hand, too high amplitude current pulses may damage the control electronics or even the motor. Therefore, in order to have the smallest possible amplitude of the current pulses that still allows for the rotor polarity detection, these optimal current amplitudes are determined in an off-line experimental procedure for various different motor families. These values are then stored in a lookup table. In the on-line procedure, based on the identified motor resistance, inductance and electrical time constant, the optimal value of the current amplitude $I_{Amp}$ is determined from the lookup table. Based on this amplitude, the time length of the voltage excitation pulse is calculated as:

$$T_{Pulse} = -\tau * \ln\left(1 - \frac{I_{Amp} \cdot R}{U_{DC}}\right)$$

where $U_{DC}$ is the maximal voltage that can be applied to the motor with the given driver supply voltage and the maximal allowed duty cycle. The actual value of time length of the first voltage pulse is determined by rounding the value determined on the basis of the mentioned equation to a higher value of time length equal to an integer multiple of the PWM period, and the required value of the duty cycle is scaled accordingly to gain a close match to the predefined optimal current amplitude. The duty cycles of the phases are saturated such that consecutive voltage pulses subsequent to the first voltage pulse are applied by keeping the voltage of one phase at maximum, the voltage of another phase at zero and adapting the voltage of the third phase such that the desired resulting voltage vector is achieved.

### 3.) **Excitation execution, sample collection and processing**

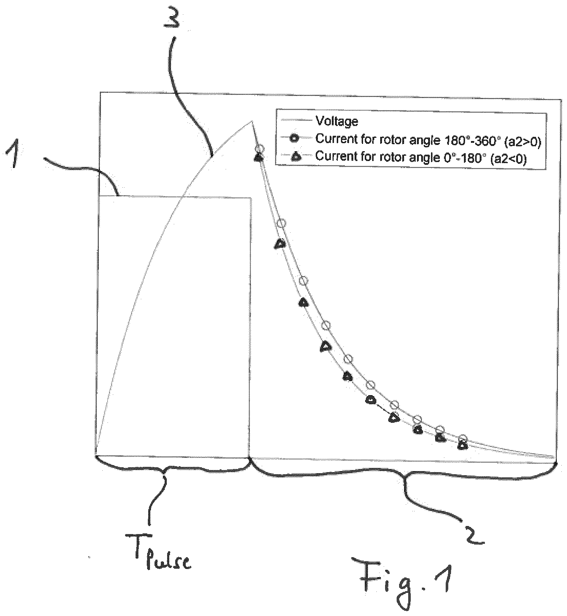

During the excitation phase, excitation voltage pulses aligned with the magnet (pole axis) are injected in both directions. Pulses are injected in such a way that a positive voltage pulse is followed by a negative one. Injected voltage pulses have the length calculated in the previous phase, and each one is followed by a period of zero voltage during which the current samples are taken. This is illustrated in Fig. 1. Fig. 1 shows voltage pulse 1 of a certain time length and also a zero voltage phase 2 thereafter. Fig. 1 also shows the corresponding current waveform 3 resulting from the voltage pulse 1. Fig. 1 depicts the transformed voltage pulse and the transformed current pulse gained from the three phases. For the sample collection of the currents, only the portion of the waveform 3 within the zero voltage period 2 is relevant. The current samples are taken with high frequency in order to gain a good representation of the current waveform in this portion. Fig. 1 shows that there exists a deviation of the waveform between the current rotor angle 0° - 180° and the current rotor angle 180° - 360°. The deviation is shown in an exaggerated manner and it is actually very small for an ironless BLDC motor.

In order to estimate the difference in the current response to the positive and the negative voltage pulses, dynamic evolution of the current samples projected onto the injected voltage vector is used. The following model of evolution is assumed:

$$i_{k+1} = i_k + a_1 \cdot i_k + a_2 \cdot f(i_k) + b,$$

where $f(i_k)$ is an even function of $i_k$, preferably a quadratic function, namely $f(i_k) = i_k^2$ and where the parameters $a_1$, $a_2$ and $b$ are considered to be unknown. In particular, treating the parameters $a_1$ and $a_2$ as the parameters that are same for all the excitation pulses and b as parameter which may have different values for each excitation pulse, least squares algorithm is used in order to identify all these parameters. Only parameter $a_2$ is used for determining polarity. Namely, if the parameter $a_2$ is positive, the rotor angle is in the range 180° - 360°, and when it is negative, the rotor angle is in the range 0° - 180°. To improve the accuracy of the polarity determination, additional dynamics may be taken into account by augmenting the equation with additional terms.

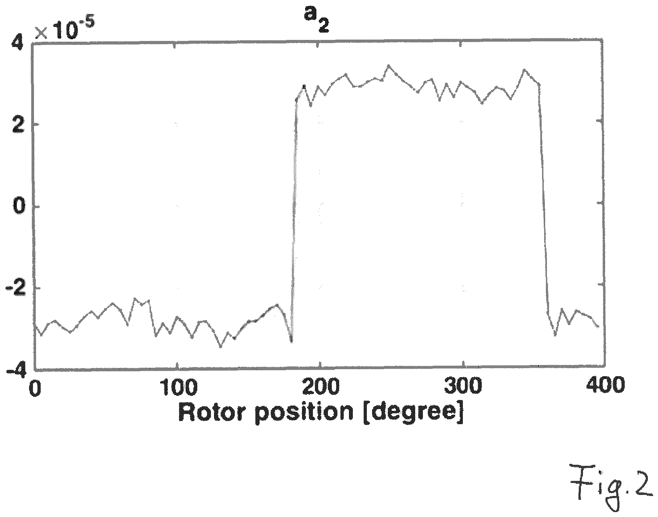

Fig. 2 shows experimentally determined values for parameter $a_2$ as a function of rotor position. As can be seen from this figure, the values for $a_2$ are rather small, namely, in the range of 4 x 10$^{-5}$ and -4 x 10$^{-5}$. Because of these small values, it is important to use optimal determination of the excitation pulse parameters, namely, the use of a special modulation and sampling scheme. The positive and negative pulses that are created in that way are very similar and a special identification strategy is used that relies on a model that is used to extract the information on orientation from the collected data. All these are unique features of the proposed method that differentiate it from other published methods that rely on the saturation effects.

To summarize:

1) The rotor position with a possible 180° uncertainty is identified.
2) The motor electric parameters: resistance, inductance and electrical time constant are identified.
3) Based on the identified motor electric parameters, the excitation pulses are configured by calculating their optimal length.
4) A sequence of several positive and negative such pulses is applied to stator windings along the rotor orientation and the resulting current samples are collected and projected to the direction in which the pulses are injected in the α-β plane.
5) Collected samples are used to calculate parameters of the current sample evolution model by using least squares algorithm (or any other alternative state of the art identification method).
6) Rotor polarity is determined from the sign of one of the identified parameters

References:

[1] S. Mariéthoz, O. Schultes, M. Tanaskovic, D. Frick, "Method for determining the position of a rotor of a polyphase motor", patent application EP2924870A1, maxon motor ag.

[2] J. Holtz, "Acquisition of position error and magnet polarity for sensorless control of pm synchronous machines", Industry Applications, IEEE Transactions on, vol. 44, no. 4, 2008, pages 1172-1180.

[3] M. Schroedl, "Sensorless control of ac machines at low speed and standstill based on the IINFORM method", Industry Applications Conference, 1996. Thirty-first IAS Annual Meeting, IAS '96., conference record of the 1996 IEEE vol. 1, 1996, pages 270 - 277.

[4] D. Basic, F. Malrait, and P. Rouchon, "Current controller for low-frequency signal injection and rotor flux position tracking at low speeds", Industrial Electronics, IEEE Transactions on, vol. 58, no. 9, pages 4010 - 4022.

[5] J. Kim and S.-K. Sul, "New stand-still position detection strategy for PMSM drive without rotational transducers", in Applied Power Electronics Conference and Ex-position, 1994. APEC '94. Conference Proceedings 1994., Ninth Annual, Feb, pages 363 - 369.

[6] S. Bolognani, S. Calligaro, and R. Petrella, "Sensorless quasi-standstill and very low speed position detection in non-salient PMSMs based on current injection and back-EMF observer", in Sensorless Control for Electrical Drives (SLED), 2012 IEEE Symposium on, Sept., pages 1 - 7.

[7] D. Frick, S. Mariethoz, M. Tanaskovié, D. Lehmann, Method and system for sensorless determination of the orientation of the rotor of an ironless pmsm motor, patent application EP3288179A1, Lakeview Innovation AG.

[8] M. Tanaskovic, C. Zhao, F. Percacci, P. Gnos, S. Mariethoz, D. Frick, Rotor Polarity Detection and Tracking for Slotless Permanent Magnet Synchronous Motors, IEEE 9th International Symposium on Sensorless Control for Electrical Drives (SLED), Helsinki, Finland, Sep, 2018.

**Claims**

1. Method for detecting the orientation of the rotor polarity of a BLDC motor, especially with an ironless winding or slotless winding, i.e. eliminating a 180° ambiguity, comprising the following steps:

   determining the position of the rotor, i.e. the rotor angle, with a 180° ambiguity,
   injecting at least one voltage pulse (1) with an orientation in the $\alpha$-$\beta$ plane that matches the position of the rotor determined in the previous step,
   taking current samples with especially high frequency resulting from the at least one voltage pulse (1) during a period (2) where zero voltage is applied in order to gain a representation of the resulting current waveform (3), and processing the current samples to determine variations in the current waveform (3) indicative for the orientation of the rotor polarity, **characterized in that** in the step of processing the current samples the dynamic evolution of the current samples projected onto the injected voltage vector is used, and **in that**
   the following model of evolution is used in the processing step:

   $$i_{k+1} = i_k + a_1 \cdot i_k + a_2 \cdot f(i_k) + b,$$

   wherein

   $i_k$ is an amount of the current vector,
   $f(i_k)$ is an even function of $i_k$,
   $i_{k+1}$ is an amount of a subsequent current vector and
   $a_1$, $a_2$ and b are parameters

   and wherein the parameters $a_1$, $a_2$ and $b$ are determined by use of a least squares algorithm or a method for identifying unknown parameters or a method for solving systems for respective equations.

2. Method according to claim 1, **characterized in that** the step of injecting at least one voltage pulse (1) is carried out without causing any motion of the rotor.

3. Method according to claim 2, **characterized in that** the step of injecting at least one voltage pulse (1) involves excitation of positive and negative voltage pulses (1) in the $\alpha$-$\beta$ plane.

4. Method according to any of claims 1 to 3, **characterized in that** in the step of taking the current samples the acquisition starts substantially immediately after the start of the period (2) where zero voltage is applied until the current, which exponentially decays toward zero, reaches zero or nearly zero.

5. Method according to claim 1, **characterized in that** the following model of evolution is used in the processing step:

   $$i_{k+1} = i_k + a_1 \cdot i_k + a_2 \cdot i_k{}^2 + b,$$

wherein

$i_k$ is an amount of the current vector,
$i_{k+1}$ is an amount of a subsequent current vector and
$a_1$, $a_2$ and b are parameters

and wherein the parameters $a_1$, $a_2$ and $b$ are determined by use of a least squares algorithm or a method for identifying unknown parameters or a method for solving systems for respective equations.

6. Method according to claim 1 or 5, **characterized in that** in the processing step only parameter $a_2$ is used for determining the orientation of the rotor polarity.

7. Method according to any of claims 1 to 6, **characterized in that** in a processing step before the step of injecting at least one voltage pulse (1) at least the time length of the at least one voltage pulse (1) is determined based on stored and/or identified motor electric parameters.

8. Method according to claim 7, **characterized in that** as motor electric parameters the motor resistance ($R$), motor inductance ($L$) and the motor electrical time constant ($\tau$) are precisely identified for the respective BLDC motor.

9. Method according to claim 7 and 8, **characterized in that** the time length of the at least one voltage pulse (1) is determined based on the following equation:

$$T_{Pulse} = -\tau \cdot \ln\left(1 - \frac{I_{Amp} \cdot R}{U_{DC}}\right)$$

wherein

R is the stored or identified motor resistance,
$\tau$ is the stored or identified motor electrical time constant,
$I_{Amp}$ is a predefined optimal current amplitude, and
$U_{DC}$ is the voltage that can be applied to the motor with the given driver supply voltage and an allowed duty cycle.

10. Method according to claim 9, **characterized in that** the voltage $U_{DC}$ is the maximal voltage that can be applied to the motor with the given supply driver voltage and the maximum allowed duty cycle.

11. Method according to claim 9 or 10, **characterized in that** the predefined optimal current amplitude is determined in an off-line experimental procedure and the predefined optimal current amplitude for the respective BLDC motor is automatically retrieved from a lookup table in order to determine the time length of the at least one voltage pulse (1).

12. Method according to any of claims 9 to 11, **characterized in that** the actual value of time length of the first voltage pulse (1) is determined by rounding the value determined on the basis of the equation mentioned in claim 9 to a higher value of time length equal to an integer multiple of the PWM period, and the required value of the duty cycle is scaled accordingly to gain a close match to the predefined optimal current amplitude.

13. Method according to any of claims 9 to 12, **characterized in that** the duty cycles of phases are saturated such that consecutive voltage pulses (1) subsequent to the first voltage pulse (1) are applied by keeping the voltage of one phase at maximum, the voltage of another phase at zero and adapting the voltage of the third phase such that adesired resulting voltage vector is achieved.

14. Motor system for detecting the orientation of the rotor polarity of a BLDC motor, i.e. eliminating 180° ambiguity, according to the method of one of claims 1 to 13, **characterized in** comprising a processing unit for processing current samples to determine variations in a current waveform (3) indicative for the orientation of the rotor polarity.

**Patentansprüche**

1. Verfahren zur Erkennung der Orientierung der Rotorpolarität eines BLDC-Motors, insbesondere mit einer eisenlosen Wicklung oder einer nutenlosen Wicklung, d.h. Eliminierung einer 180°-Zweideutigkeit, umfassend die folgenden Schritte:

Bestimmen der Position des Rotors, d.h. des Rotorwinkels, mit einer 180°-Zweideutigkeit,
Einspeisen von mindestens einem Spannungsimpuls (1) mit einer Orientierung in der $\alpha$-$\beta$-Ebene, die mit der im vorherigen Schritt bestimmten Position des Rotors übereinstimmt,
Entnehmen von Strommuster mit besonders hoher Frequenz, die sich aus dem mindestens einen Spannungsimpuls (1) während einer Periode (2) ergeben, in der keine Spannung anliegt, um eine Darstellung der resultierenden Stromwellenform (3) zu erhalten, und
Verarbeiten der Strommuster, um Veränderungen in der Stromwellenform (3) zu bestimmen, die für die Orientierung der Rotorpolarität indikativ sind,
**dadurch gekennzeichnet, dass** in dem Schritt des Verarbeitens der Strommuster die dynamische Entwicklung der auf den eingespeisten Spannungsvektor projizierten Strommuster verwendet wird, und
dass im Verarbeitungsschritt das folgende Evolutionsmodell eingesetzt wird:

$$i_{k+1} = i_k + a_1 \cdot i_k + a_2 \cdot f(i_k) + b,$$

wobei

$i_k$ ein Betrag des aktuellen Vektors ist,
$f(i_k)$ eine gerade Funktion von $i_k$ ist,
$i_{k+1}$ ein Betrag eines nachfolgenden aktuellen Vektors ist und
$a_1$, $a_2$ und b Parameter sind,

und wobei die Parameter $a_1$, $a_2$ und *b* unter Verwendung eines Algorithmus der kleinsten Quadrate oder eines Verfahrens zur Identifizierung unbekannter Parameter oder eines Verfahrens zur Lösung von Systemen für entsprechende Gleichungen bestimmt werden.

2. Verfahren nach Anspruch 1, **dadurch gekennzeichnet, dass** der Schritt des Einspeisens von mindestens einem Spannungsimpuls (1) durchgeführt wird, ohne eine Bewegung des Rotors zu verursachen.

3. Verfahren nach Anspruch 2, **dadurch gekennzeichnet, dass** der Schritt des Einspeisens von mindestens einem Spannungsimpuls (1) die Anregung von positiven und negativen Spannungsimpulsen (1) in der $\alpha$-$\beta$-Ebene umfasst.

4. Verfahren nach einem der Ansprüche 1 bis 3, **dadurch gekennzeichnet, dass** in dem Schritt des Entnehmens von Strommuster die Erfassung im Wesentlichen unmittelbar nach dem Beginn der Periode (2) startet, in der Nullspannung angelegt wird, bis der Strom, der exponentiell gegen Null abfällt, Null oder nahezu Null erreicht.

5. Verfahren nach Anspruch 1, **dadurch gekennzeichnet, dass** in dem Verarbeitungsschritt das folgende Evolutionsmodell eingesetzt wird:

$$i_{k+1} = i_k + a_1 \cdot i_k + a_2 \cdot i_k{}^2 + b,$$

wobei

$i_k$ ein Betrag des aktuellen Vektors ist,
$i_{k+1}$ ein Betrag eines nachfolgenden aktuellen Vektors ist und
$a_1$, $a_2$ und b Parameter sind,

und wobei die Parameter $a_1$, $a_2$ und b unter Verwendung eines Algorithmus der kleinsten Quadrate oder eines Verfahrens zur Identifizierung unbekannter Parameter oder eines Verfahrens zur Lösung von Systemen für entsprechende Gleichungen bestimmt werden.

6. Verfahren nach Anspruch 1 oder 5, **dadurch gekennzeichnet, dass** in dem Verarbeitungsschritt nur der Parameter $a_2$ für das Bestimmen der Orientierung der Rotorpolarität eingesetzt wird.

**7.** Verfahren nach einem der Ansprüche 1 bis 6, **dadurch gekennzeichnet, dass** in einem Verarbeitungsschritt vor dem Schritt des Einspeisens von mindestens einem Spannungsimpuls (1) zumindest die zeitliche Länge des mindestens einen Spannungsimpulses (1) auf der Grundlage gespeicherter und/oder identifizierter Parameter der Motorelektrik bestimmt wird.

**8.** Verfahren nach Anspruch 7, **dadurch gekennzeichnet, dass** als motorelektrische Parameter der Motorwiderstand ($R$), die Motorinduktivität ($L$) und die motorelektrische Zeitkonstante ($\tau$) für den jeweiligen BLDC-Motor genau ermittelt werden.

**9.** Verfahren nach Anspruch 7 und 8, **dadurch gekennzeichnet, dass** die zeitliche Länge des mindestens einen Spannungsimpulses (1) anhand der folgenden Gleichung bestimmt wird:

$$T_{Impuls} = -\tau \cdot \ln\left(1 - \frac{I_{Amp} \cdot R}{U_{DC}}\right)$$

wobei

R der gespeicherte oder ermittelte Motorwiderstand ist,
$\tau$ is die gespeicherte oder ermittelte elektrische Zeitkonstante des Motors ist,
$I_{Amp}$ eine vordefinierte optimale Stromamplitude ist, und
$U_{DC}$ die Spannung ist, die bei der vorgegebenen Antriebs-Versorgungsspannung und einer zulässigen Einschaltdauer an den Motor angelegt werden kann.

**10.** Verfahren nach Anspruch 9, **dadurch gekennzeichnet, dass** die Spannung $U_{DC}$ die maximale Spannung ist, die bei der vorgegebenen Antriebs-Versorgungsspannung und der maximal zulässigen Einschaltdauer an den Motor angelegt werden kann.

**11.** Verfahren nach Anspruch 9 oder 10, **dadurch gekennzeichnet, dass** die vordefinierte optimale Stromamplitude in einem Offline-Versuchsverfahren bestimmt wird, wobei die vordefinierte optimale Stromamplitude für den jeweiligen BLDC-Motor automatisch aus einer Nachschlagetabelle entnommen wird, um die Zeitdauer des mindestens einen Spannungsimpulses (1) zu bestimmen.

**12.** Verfahren nach einem der Ansprüche 9 bis 11, **dadurch gekennzeichnet, dass** der tatsächliche Wert der Zeitdauer des ersten Spannungsimpulses (1) bestimmt wird, indem der auf der Grundlage der in Anspruch 9 genannten Gleichung ermittelte Wert auf einen höheren Wert der Zeitdauer aufgerundet wird, der einem ganzzahligen Vielfachen der PWM-Periode entspricht, und wobei der erforderliche Wert der Einschaltdauer entsprechend skaliert wird, um eine enge Übereinstimmung mit der vordefinierten optimalen Stromamplitude zu erhalten.

**13.** Verfahren nach einem der Ansprüche 9 bis 12, **dadurch gekennzeichnet, dass** die Einschaltdauern der Phasen so eingestellt sind, dass die auf den ersten Spannungsimpuls (1) folgende Spannungsimpulse (1) angelegt werden, um die Spannung einer Phase auf einem Maximum zu halten, die Spannung einer anderen Phase auf Null zu halten und die Spannung der dritten Phase so anzupassen wird, dass ein gewünschter resultierender Spannungsvektor erreicht wird.

**14.** Motorsystem zum Erfassen der Orientierung der Rotorpolarität eines BLDC-Motors, d.h. zum Eliminieren der 180°-Zweideutigkeit, nach dem Verfahren eines der Ansprüche 1 bis 13, **dadurch gekennzeichnet, dass** das Motorsystem eine Einheit zum Verarbeiten von Strommustern umfasst, um Veränderungen in einer Stromwellenform (3) zu bestimmen, die die Orientierung der Rotorpolarität anzeigen.

**Revendications**

**1.** Procédé de détection de l'orientation de la polarité d'un rotor d'un moteur BLDC, spécialement ayant un bobinage sans fer ou un bobinage sans encoche, c'est-à-dire en éliminant une ambiguïté de 180°, comprenant les étapes suivantes consistant à :

déterminer la position du rotor, c'est-à-dire l'angle du rotor, avec une ambiguïté de 180°,

injecter au moins une impulsion de tension (1) avec une orientation dans le plan $\alpha$-$\beta$ qui correspond à la position du rotor déterminée dans l'étape précédente,

prendre des échantillons de courant avec une fréquence particulièrement élevée résultant de la au moins une impulsion de tension (1) durant une période (2) où une tension nulle est appliquée afin d'obtenir une représentation de la forme d'onde de courant (3) résultante, et

traiter les échantillons de courant afin de déterminer des variations dans la forme d'onde de courant (3) indicatrices de l'orientation de la polarité du rotor, **caractérisé en ce que** dans l'étape de traitement des échantillons de courant, l'évolution dynamique des échantillons de courant projetée sur le vecteur de tension injecté est utilisée, et **en ce que**

le modèle d'évolution suivant est utilisé dans l'étape de traitement :

$$i_{k+1} = i_k + a_1 \cdot i_k + a_2 \cdot f(i_k) + b,$$

$i_k$ étant une quantité du vecteur de courant,
$f(i_k)$ étant une fonction uniforme de $i_k$,
$i_{k+1}$ étant une quantité d'un vecteur de courant ultérieur et
$a_1$, $a_2$ et b étant des paramètres
et les paramètres $a_1$, $a_2$ et b étant déterminés par une utilisation d'un algorithme des moindres carrés ou d'un procédé d'identification de paramètres inconnus ou d'un procédé pour des systèmes de résolution pour des équations respectives.

2. Procédé selon la revendication 1, **caractérisé en ce que** l'étape d'injection d'au moins une impulsion de tension (1) est exécutée sans causer de quelconque mouvement du rotor.

3. Procédé selon la revendication 2, **caractérisé en ce que** l'étape d'injection d'au moins une impulsion de tension (1) implique une excitation d'impulsions de tension positive et négative (1) dans le plan $\alpha$-$\beta$.

4. Procédé selon l'une quelconque des revendications 1 à 3, **caractérisé en ce que** dans l'étape de prise des échantillons de courant, l'acquisition commence sensiblement immédiatement après le début de la période (2) où une tension nulle est appliquée jusqu'à ce que le courant, qui décroît exponentiellement jusqu'à zéro, atteigne zéro ou quasi zéro.

5. Procédé selon la revendication 1, **caractérisé en ce que** le modèle d'évolution suivant est utilisé dans l'étape de traitement :

$$i_{k+1} = i_k + a_1 \cdot i_k + a_2 \cdot i_k^2 + b,$$

$i_k$ étant une quantité du vecteur de courant,
$i_{k+1}$ étant une quantité d'un vecteur de courant ultérieur et
$a_1$, $a_2$ et b étant des paramètres
et les paramètres $a_1$, $a_2$ et b étant déterminés par une utilisation d'un algorithme des moindres carrés ou d'un procédé d'identification de paramètres inconnus ou d'un procédé pour des systèmes de résolution pour des équations respectives.

6. Procédé selon la revendication 1 ou 5, **caractérisé en ce que** dans l'étape de traitement uniquement un paramètre $a_2$ est utilisé pour déterminer l'orientation de la polarité du rotor.

7. Procédé selon l'une quelconque des revendications 1 à 6, **caractérisé en ce que** dans une étape de traitement avant l'étape d'injection d'au moins une impulsion de tension (1) au moins la durée de la au moins une impulsion de tension (1) est déterminée sur la base de paramètres électriques de moteur stockés et/ou identifiés.

8. Procédé selon la revendication 7, **caractérisé en ce que** comme paramètres électriques de moteur, la résistance ($R$) du moteur, l'inductance ($L$) du moteur et la constante de temps électrique ($\tau$) du moteur sont identifiées avec précision pour le moteur BLDC respectif.

9. Procédé selon la revendication 7 et 8, **caractérisé en ce que** la durée de la au moins une impulsion de tension (1) est déterminée sur la base de l'équation suivante :

$$T_{Pulse} = -\tau \cdot \ln\left(1 - \frac{I_{Amp} \cdot R}{U_{DC}}\right)$$

$R$ étant la résistance du moteur stockée ou identifiée,

$\tau$ étant la constante de temps électrique du moteur stockée ou identifiée,

$I_{Amp}$ étant une amplitude de courant optimale prédéfinie, et

$U_{DC}$ étant la tension qui peut être appliquée au moteur avec la tension de commande d'alimentation donnée et un cycle de service permis.

10. Procédé selon la revendication 9, **caractérisé en ce que** la tension $U_{DC}$ est la tension maximale qui peut être appliquée au moteur avec la tension de commande d'alimentation donnée et le cycle de service permis maximal.

11. Procédé selon la revendication 9 ou 10, **caractérisé en ce que** l'amplitude de courant optimale prédéfinie est déterminée dans une procédure expérimentale hors ligne et que l'amplitude de courant optimale prédéfinie pour le moteur BLDC respectif est automatiquement récupérée à partir d'une table d'observation afin de déterminer la durée de la au moins une impulsion de tension (1).

12. Procédé selon l'une quelconque des revendications 9 à 11, **caractérisé en ce que** la valeur réelle de la durée de la première impulsion de tension (1) est déterminée en arrondissant la valeur déterminée sur la base de l'équation mentionnée dans la revendication 9 à une valeur supérieure de durée égale à un multiple entier de la période PWM, et la valeur requise du cycle de service est mise à l'échelle en fonction du gain d'une correspondance proche de l'amplitude de courant optimale prédéfinie.

13. Procédé selon l'une quelconque des revendications 9 à 12, **caractérisé en ce que** les cycles de service des phases sont saturés de sorte que des impulsions de tension (1) consécutives ultérieures à la première impulsion de tension (1) sont appliquées en maintenant la tension d'une phase à un maximum, la tension d'une autre phase à zéro et en adaptant la tension de la troisième phase de sorte qu'un vecteur de tension résultant souhaité est atteint.

14. Système moteur de détection de l'orientation de la polarité du rotor d'un moteur BLDC, c'est-à-dire d'élimination d'une ambiguïté de 180°, selon le procédé selon l'une des revendications 1 à 13, **caractérisé en ce qu'**il comprend une unité de traitement pour traiter des échantillons de courant afin de déterminer des variations dans une forme d'onde de courant (3) indicatrice de l'orientation de la polarité du rotor.

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018167010 A1
- EP 3226403 A1
- DE 102009029896 A1
- US 2010060210 A1
- JP 2013172634 A
- EP 2924870 A1
- EP 3288179 A1, D. Frick, S. Mariethoz, M. Tanaskovié, D. Lehmann

**Non-patent literature cited in the description**

- **J. HOLTZ.** Acquisition of position error and magnet polarity for sensorless control of pm synchronous machines. *Industry Applications, IEEE Transactions on,* 2008, vol. 44 (4), 1172-1180
- Sensorless control of ac machines at low speed and standstill based on the IINFORM method. **M. SCHROEDL.** Industry Applications Conference, 1996. Thirty-first IAS Annual Meeting, IAS '96. IEEE, 1996, vol. 1, 270-277
- **D. BASIC ; F. MALRAIT ; P. ROUCHON.** Current controller for low-frequency signal injection and rotor flux position tracking at low speeds. *Industrial Electronics, IEEE Transactions on,* vol. 58 (9), 4010-4022
- **J. KIM ; S.-K. SUL.** New stand-still position detection strategy for PMSM drive without rotational transducers. *Applied Power Electronics Conference and Ex-position, 1994. APEC '94. Conference Proceedings,* February 1994, 363-369
- **S. BOLOGNANI ; S. CALLIGARO ; R. PETRELLA.** Sensorless quasi-standstill and very low speed position detection in non-salient PMSMs based on current injection and back-EMF observer. *Sensorless Control for Electrical Drives (SLED),* September 2012, 1-7
- **C. ZHAO ; F. PERCACCI ; P. GNOS ; S. MARIETHOZ ; D. FRICK.** Rotor Polarity Detection and Tracking for Slotless Permanent Magnet Synchronous Motors. *IEEE 9th International Symposium on Sensorless Control for Electrical Drives (SLED),* September 2018